Europäisches Patentamt

European Patent Office

Office européen des brevets

(11) Publication number: **0 186 413**
A2

## EUROPEAN PATENT APPLICATION

(21) Application number: 85309179.1

(51) Int. Cl.⁴: **B 29 C 45/27**

(22) Date of filing: 17.12.85

(30) Priority: 21.12.84 GB 8432451

(43) Date of publication of application:
02.07.86 Bulletin 86/27

(84) Designated Contracting States:
AT BE CH DE FR GB IT LI LU NL SE

(71) Applicant: Tanner AG
Haldenweg 2
CH-8245 Feuerthalen(CH)

(72) Inventor: Tanner, Max
Haldenweg 2
CH-8245 Feuerthalen(CH)

(74) Representative: Evans, David Charles et al,
F.J. CLEVELAND & COMPANY 40-43, Chancery Lane
London, WC2A 1JQ(GB)

(54) Equipment for injection moulding of plastics.

(57) The present invention relates to an injection moulding apparatus comprising:
i) means for the supply of a mouldable material to be moulded;
ii) a mould comprising at least first and second mould parts defining a mould cavity having the shape of the article to be moulded, said first and second mould parts being separable in a direction to allow for release of a mould article; and
iii) one or more material injection points for the injection of mouldable material into the mould cavity;
characterised in that said injection points are positioned within the mould, such that the axis of injection is transverse to the direction of the separation of the first and second mould parts.

EP 0 186 413 A2

- 1 -

# EQUIPMENT FOR INJECTION MOULDING OF PLASTICS

## DESCRIPTION

The present invention relates to injection moulding apparatus and has particular reference to equipment for the injection moulding of plastics materials. At the present time injection moulding apparatus comprises means for the supply of plastics material at room temperature, usually in the form of granules means for feeding the raw material together with any necessary additives to a heating chamber whereby the material is heated to form a melt capable of being moulded and it is then transported under the influence of, for example, a transport screw via a heated supply conduit to a mould. The mould is usually a multi-part mould having at least two principal parts, all the parts when assembled, defining a mould cavity having the shape and configuration of the article to be moulded. The material is usually supplied to the mould cavity by means of the heated conduit and heating means is provided within at least part of the mould housing itself to prevent premature cooling of the plastics material prior to injection into the mould cavity.

The moulding operation is usually effected by a stroke of an injection piston or ram, and mouldable material is injected into the mould cavity substantially parallel to the direction which the mould is subsequently split. The material within the mould is allowed to cool until it has solidified sufficiently to retain its moulded shape. The mould is then split in a direction such that the moulded article can be withdrawn. A first part of the mould not connected with the material supply system is withdrawn and the article is then eased out of the mould for subsequent cleaning up.

A difficulty with this type of apparatus is that on solidification a part of the material still within the injection conduit within the mould also solidifies. On withdrawal of the article from the second mould part which remains connected with the plastics supply, this solidified portion known as a sprue is also withdrawn leaving an imperfectly moulded article. It follows, therefore, that the surplus comprising the "sprue" has to be removed before the moulded article is complete.

There is further the problem that by providing a heating element which extends almost to the edge of the mould itself while this will avoid or reduce the extent of the formation of sprues, it will, nevertheless, tend to leave a molten portion juxtaposed the mould gate which can deform when the moulded article is removed therefrom prematurely.

According to the present invention, therefore, there is provided injection moulding appartus comprising:

(i)     means for the supply of a mouldable material to be moulded;

(ii)    a mould comprising at least first and second mould parts defining a mould cavity having the shape of the article to be moulded, said first and second mould parts being separable in a direction to allow for release of a mould article; and

(iii)   one or more material injection points for the injection of mouldable material into the mould cavity;

characterised in that said injection points are positioned within the mould, such that the axis of injection is transverse to the direction of the separation of the first and second mould parts.

The mouldable material is preferably a plastics material and the means for supply preferably includes heating means for forming an injectable melt of said plastics material. The point or points of injection of said material into the mould is preferably in the side of the mould when considered with respect to the direction of separation of the first and second mould parts.

The supply means may comprise a conduit of substantially circular cross-section, juxtaposed a heating member for the supply of heat to the mouldable material to maintain said material at a moulding temperature. The heating element may be adapted to supply heat to material in the conduits within the mould body. The supply conduit for the mouldable material is preferably of circular cross-section at the point of injection into the mould cavity. The heating element extending into the conduit within the mould body is preferably a metal element in heat conducting contact with the heat member of the supply means.

By injecting laterally into the side of the mould as opposed to coaxially with the direction of separation of the mould part, any sprue that does form is removed on withdrawal of the moulded article from the mould.

In the prior art, by providing a heating channel integral with the mould itself what is left in the injection head has to be expelled at the end of the moulding operation and is thus wasted. Furthermore, this operation involves a considerable amount of dismantling. This problem is overcome in the present invention, since by providing a transmission of heat by means of conduction into the conduits within the mould, separation of the components can be effected readily by simply separating the mould from the heating element and removing the heat conducting insert, thereby permitting ready removal of surplus material within the mould. Since the present invention provides for effective heating of mouldable material almost into the mould cavity, much of the waste hitherto noted is avoided.

The molten material of the present invention can in one embodiment of the invention flow in separate channels right up to the injection gate and this has the advantage of providing substantially uniform flow of polymer having a substantially uniform temperature distribution.

Furthermore, the injection apparatus of the present invention provides for a more compact volume of the injection head and thus provides apparatus more suitable for multi-head injection equipment.

Following is a description by way of example only

- 6 -

and with reference to the accompanying drawings of methods of carrying the invention into effect.

Figure 1 is a section through an injection in accordance with the present invention.

Figure 2 is a section through a two-part injection head in accordance with the present invention.

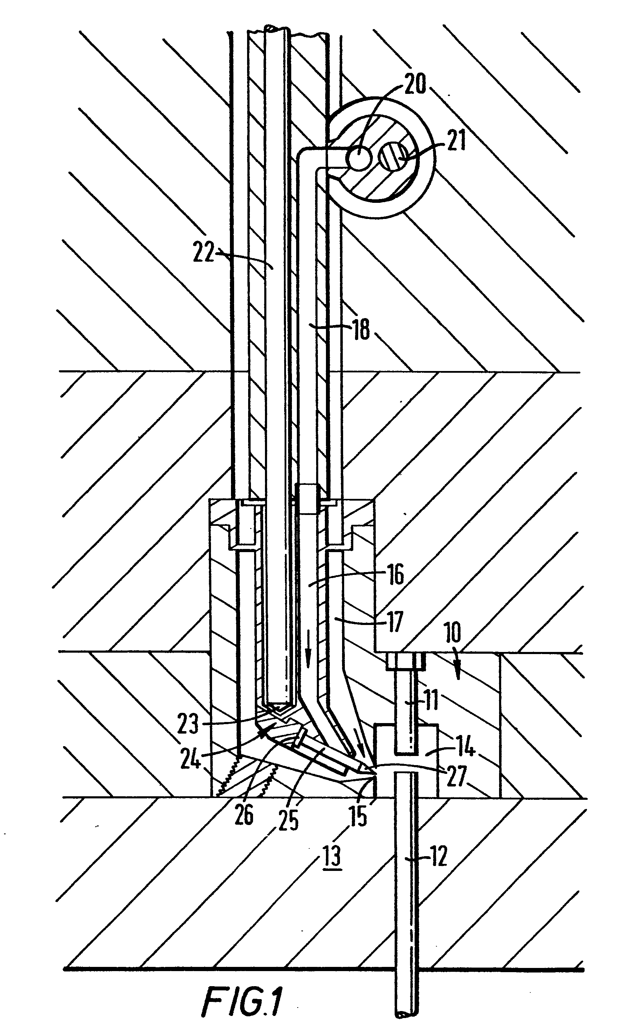

Turning first to Figure 1, the mould comprises a first mould member 10 having a first insert 11 and a second withdrawable insert 12 secured with a withdrawable body 13, the mould components serving to define a mould cavity 14 which as viewed in Figure 1 has a general cross section in the form of a letter 'H'. The mould body 10 carries on one side thereof an injection gate 15 which is supplied with molten plastics material by means of conduit 16 which supplies plastics material in the direction shown in the arrow to a further conduit 17 whereby the plastics material is mixed between conduits 16 and 17 for supply to gate 15.

The supply of mouldable material is provided by an upward extension 18 of conduit 16 from material supply conduit 20. The temperature of the material as supplied from conduit 20 via conduit 18 to conduit 16 in the mould head is maintained by means of heating elements 21 and 22 respectively. Heating element 21 is substantially parallel with conduits 18 and 16 respectively and extends downwardly into the moulding head to terminate at its lower end 23 in juxtaposition to mould head heating means indicated generally at 24. Mould head heating means comprises a steel rod 25 having at its first end a head 26 and at a second end a point 27 which is juxtaposed mould gate 15. The greater part of the body of rod 25 and its associated head 26 is surrounded by housing 24 which is also of heat conducting metal and is heat conducting contact with the lower end at 23 of heating element 22, the arrangement being such that mouldable material passing down conduit 16 is maintained at mouldable temperature by its juxtaposition with heating element 22 until it passes into the area of rod 25 and then passes again into the area 17 where towards the mould gate 15 the material is still subject to heating by means of the extremity 27 of rod 25.

In operation, therefore, with the mould assembled as shown in Figure 1, operation of the moulding stroke of the machine forces the material down the various conduits 18, 16 and 17 to mould gate 15 where it is injected into the mould cavity 14 to fill the mould. After a short pause to allow for solidification of the mouldable material within the mould 14, mould block 13 and its associated insert 12 is withdrawn. Insert 11 is then caused to move downwardly to expel the moulded article within the mould cavity 14 downwardly with respect to the mould. Any spruce formation occuring at the mould gate is removed by the sheer force applied at the gate as the article is expelled downwardly from the mould cavity 14.

On clearance of the moulded article 14 from the vicinity of the removable mould portions 12/13 the mould portions of 12, 13 and insert 11 return to their datum position for a repeat of the cycle.

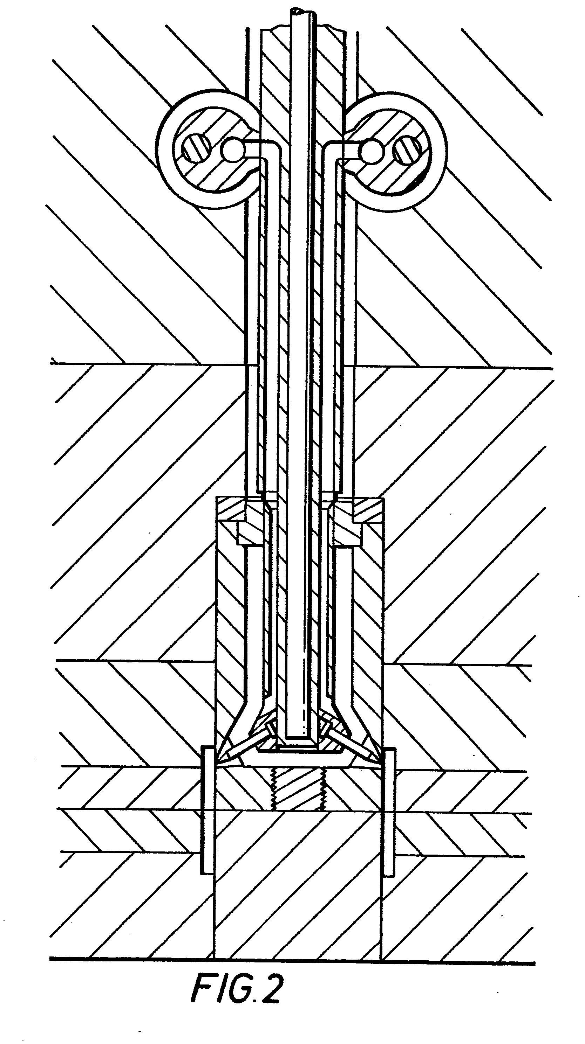

Figure 2 shows a variation of the apparatus as applied to a two-head injection moulding apparatus in accordance with the present invention.

## CLAIMS

1. Injection moulding apparatus comprising:

(i)   means for the supply of a mouldable material to be moulded;

(ii)  a mould comprising at least first and second mould parts defining a mould cavity having the shape of the article to be moulded, said first and second mould parts being separable in a direction to allow for release of a mould article; and

(iii) one or more material injection points for the injection of mouldable material into the mould cavity;

characterised in that said injection points are positioned within the mould, such that the axis of injection is transverse to the direction of the separation of the first and second mould parts.

2. Apparatus as claimed in Claim 1 characterised in that the mouldable material is a plastics material and wherein the means for supply includes heating means for forming an injectable melt of said plastics material.

- 10 -

3. Apparatus as claimed in Claim 1 or Claim 2 characterised in that each point of injection of said material into said mould is in the side of the mould when considered with respect to the direction of separation of said first and second mould parts.

4. Apparatus as claimed in any one of the preceding claims characterised in that the supply means comprises a supply conduit of substantially annular cross-section; the central portion of which comprises a heating member for the supply of heat to the mouldable material to maintain said material at a mouldable temperature.

5. Apparatus as claimed in Claim 4 characterised in that a heated element extends into the conduit within the mould body.

6. Apparatus as claimed in Claim 5 characterised in that the supply conduit for the mouldable material is of substantially circular cross-section at the point of injection into the mould cavity.

7. Apparatus as claimed in Claim 5 or Claim 6 characterised in that the heated element extending into the conduit within the mould body is a metal element in

- 11 -

heat conducting contact with the heating member of the
supply means.

FIG.1

FIG.2